# EUROPÄISCHE PATENTSCHRIFT

(11) **EP 0 655 104 B1**
(45) Veröffentlichungstag und Bekanntmachung des Hinweises auf die Patenterteilung: **10.12.1997**
(21) Anmeldenummer: 94908173.1
(22) Anmeldetag: 12.08.1993
(51) Int. Cl.: F01N 7/00

(54) **VERFAHREN ZUR ÜBERWACHUNG DER FUNKTION EINES KATALYTISCHEN KONVERTERS**
PROCESS FOR MONITORING THE OPERATION OF A CATALYTIC CONVERTER
PROCEDE PERMETTANT DE SURVEILLER LE FONCTIONNEMENT D'UN CONVERTISSEUR CATALYTIQUE

(30) Priorität: 17.08.1992 DE 4227207; 16.06.1993 DE 4319924
(43) Veröffentlichungstag der Anmeldung: 31.05.1995
(73) Patentinhaber: Emitec Gesellschaft für Emissionstechnologie mbH, 53797 Lohmar (DE)
(72) Erfinder: Maus, Wolfgang, D-51429 Bergisch Gladbach (DE); Swars, Helmut, D-51429 Bergisch Gladbach (DE); Brück, Rolf, D-51429 Bergisch Gladbach (DE)
(74) Vertreter: Kahlhöfer, Hermann, Dipl.-Phys.
(86) Internationale Anmeldenummer: EP9302150
(87) Internationale Veröffentlichungsnummer: WO9404800

(56) Entgegenhaltungen:
- EP-A- 0 442 648
- WO-A-91/14855
- DE-A- 2 643 739
- GB-A- 1 373 826
- PATENT ABSTRACTS OF JAPAN vol. 016, no. 253 (M-1263)9. Juni 1992 & JP,A,04 060 106 (MAZDA MOTOR) 26 February 1992

## Beschreibung

Die vorliegende Erfindung betrifft ein Verfahren zur Analyse des Zustands zumindest eines Teilvolumens eines von einem Gasgemisch durchströmten katalytischen Konverters, insbesondere zur Überwachung der Funktion eines einem Verbrennungsmotor mit elektronischer Steuerung nachgeschalteten katalytischen Konverters. Hauptsächliches Anwendungsgebiet sind katalytische Konverter und auch motornahe, sogenannte Vorkatalysatoren bei Personenkraftwagen mit Otto-Motoren. Im Zusammenhang mit weltweit immer strenger werdenden Gesetzen zur Minderung des Schadstoffausstoßes von Kraftfahrzeugen mit Verbrennungsmotor wird es auch zunehmend erforderlich, die Funktion eines einem Verbrennungsmotor nachgeschalteten katalytischen Konverters ständig oder in Abständen zu überwachen, um Informationen über seinen Zustand, seine Wirksamkeit und nach Möglichkeit über die noch zu erwartende Lebensdauer zu erhalten. Eine solche Überwachung soll beim Fahrbetrieb zu passenden Gelegenheiten durchgeführt werden und wird daher auch mit dem Kürzel OBD (On Board Diagnosis) bezeichnet.

Im Stand der Technik sind zahlreiche Verfahren zur Überwachung der Funktion eines katalytischen Konverters bekannt, welche verschiedene physikalische und chemische Effekte ausnutzen. Zunächst kann mittels sogenannter Lamdasonden vor und hinter dem Katalysator der Sauerstoffgehalt des Abgases gemessen werden. Aus der Abnahme des Sauerstoffgehaltes zwischen beiden Sonden kann dabei auf die Funktion des katalytischen Konverters geschlossen werden. Ein anderes physikalisches Prinzip nutzt die Tatsache aus, daß die im katalytischen Konverter ablaufenden Prozesse exotherme Reaktionen sind, welche Wärmeenergie freisetzen. Im einfachsten Fall kann daher auch aus der Temperaturdifferenz von Temperaturfühlern, zwischen denen sich zumindest ein großer Teil des katalytisch aktiven Volumens befindet, auf die Wirksamkeit des katalytischen Konverters geschlossen werden. Ein solches Verfahren und eine zugehörige Vorrichtung sind beispielsweise in der WO 91/14855 beschrieben. Geeignete Sensoren, mit denen Temperaturmessungen in einem katalytischen Konverter durchgeführt werden können, sind in dieser Schrift und auch in der WO 93/05284 beschrieben. Grundsätzlich muß man bei Temperaturmessungen im Abgassystem eines Verbrennungsmotors zwischen Messungen der Gastemperatur und Messungen der Strukturtemperatur im katalytischen Konverter unterscheiden. Die Struktur eines katalytischen Konverters, die die katalytisch aktive Masse an ihrer Oberfläche trägt, nimmt sehr viel schneller die Energie einer exothermen Reaktion in der katalytisch aktiven Oberfläche auf als das vorbeiströmende Abgas. Die Temperaturmessung dort erfolgt daher sozusagen an der Wärmequelle und reagiert in vielen Fällen bei transienten Vorgängen wesentlich schneller und genauer als die Gastemperatur. Trotzdem zeigt auch die Gastemperatur, wenn auch verzögert und/oder abgeschwächt, ähnliche Reaktionen, so daß auswertbare Messungen nicht nur an der Struktur, sondern mit Einschränkungen auch im Abgas selbst innerhalb des katalytischen Konverters möglich sind.

Aus der DE 41 00 397 Al ist weiterhin ein Meßverfahren bekannt, bei welchem der Zustand eines Verbrennungsmotor kurzzeitig gestört wird, insbesondere durch Abschalten der Zündung und Einspritzen von Benzin während des Schubbetriebes, wobei die Reaktion von Temperaturfühlern an verschiedenen Stellen im Abgassystem beobachtet wird. Dabei wird auch vorgeschlagen, die Temperatursignale zu differenzieren und die differenzierten Signale zu speichern bzw. diese Signale mit schon gespeicherten älteren Werten zu vergleichen.

Bei der Temperaturmessung in Abgassystemen, insbesondere innerhalb von katalytischen Konvertern gibt es folgende prinzipiellen Probleme: Einerseits sind die auftretenden absoluten Temperaturen so hoch, daß mit herkömmlichen, wirtschaftlich noch einsetzbaren Temperaturfühlern die absoluten Temperaturen nicht genau genug gemessen werden können, um daraus zuverlässige Schlüsse zu ziehen. Insbesondere bei der Bildung der Differenz von mehreren Temperaturfühlern addieren sich die Meßfehler, sodaß aufgrund der Meßfehler die an sich kleinen Änderungen, die gemessen werden sollen, nicht mehr sicher feststellbar sind. Ein weiteres Problem besteht darin, daß die von einem Temperaturfühler gemessenen Werte innerhalb eines katalytischen Konverters stark von der Stelle abhängen, an der der Fühler eingebaut ist. Ist beispielsweise ein Temperaturfühler ganz am Anfang eines etwa 20 cm langen katalytischen Konverters eingebaut, so kann es sein, daß sich dieser Fühler schon nach kurzer Betriebszeit in einer katalytisch wenig aktiven Zone befindet, so daß die dort gemessenen Werte praktisch keinerlei Aussagen mehr über die Funktionsfähigkeit des übrigen Katalysatorvolumens liefern können. Andererseits würde ein am Ende des katalytischen Konverters eingebauter Temperaturfühler bei transienten Vorgängen, insbesondere bei kurzzeitigen Störungen des Betriebszustandes des Verbrennungsmotors bei einem Katalysator mit noch geringer Betriebszeit praktisch keinerlei Änderung messen, da sich die gesamte exotherme Reaktion im vorderen Bereich des katalytischen Konverters abspielt und durch die Wärmekapazität des dahinterliegenden Teiles kurzzeitige Änderungen nicht oder nur verzögert und stark abgeschwächt am Ende des katalytischen Konverters feststellbar sind. Noch schwieriger wird die Situation in dem häufigen Fall, daß ein katalytischer Konverter aus mehreren hintereinander angeordneten Teilkörpern besteht. Hier ist die Aussagekraft eines an irgendeiner Stelle gewonnenen Temperaturmeßwertes für den Gesamtzustand des Systems sehr gering.

Aufgabe der vorliegenden Erfindung ist es, ein Verfahren zur Analyse des Zustands zumindest eines Teilvolumens eines von einem Gasgemisch durchströmten katalytischen Konverters zu schaffen, welches die beschriebenen Nachteile vermeidet und allein oder gemeinsam mit der Analyse des Zustandes weiterer Teilvolumina eine zuverlässige Aussage über den Gesamtzustand eines katalytischen Konverters liefert. Die Erfindung geht dabei von der Erkenntnis aus, daß sich der Zustand eines katalytischen Konverters und sein Verhalten unter Betriebsbedingungen recht gut anhand einfacher Modelle beschreiben läßt und nur wenige physikalische Größen bei den mathematischen Gleichungen zur Beschreibung eines solchen Modells benötigt werden. Einige grundsätzliche Überlegungen dazu sind aus dem Dokument "SAE Technical Paper Series 930938" mit dem Titel "A Linear Catalyst Temperature Sensor for Exhaust Gas Ignition (EGI) and On Board Diagnostics of Misfire and Catalyst Efficiensy" von Nick Collings et al. und aus dem Dokument "SAE Technical Paper Series 930624" mit dem Titel "Thermal Measurements Inside a Three-Way Catalytic Converter on Engine Bench" von Angelo Germidis et al. zu entnehmen.

Die vorliegende Erfindung geht nunmehr von der Betrachtungsweise aus, daß ein Katalysatorvolumen theoretisch in zwei oder mehr hintereinanderliegende Teilvolumina zerlegt werden kann und man diese Teilvolumina einzeln oder im Zusammenhang betrachten muß.

Zur Lösung der gestellten Aufgabe dient daher ein Verfahren zur Analyse des Zustands zumindest eines Teilvolumens eines von einem Gasgemisch durchströmten katalytischen Konverters, bei dem während einer Änderung der chemischen und/oder physikalischen Eigenschaften des Gasgemisches mindestens an einer Stelle oder in einem Bereich innerhalb des Teilvolumens mit einem Sensor eine Temperaturmessung durchgeführt wird, wobei die Stelle oder der Bereich und die Anordnung des Sensors so gewählt sind, daß die Reaktion der gemessenen Temperatur auf die Änderung der Eigenschaften des Gasgemisches zumindest näherungsweise repräsentativ für die Reaktion der Temperatur in dem Teilvolumen des katalytischen Konverters ist, und wobei weiter die Reaktion der gemessenen Temperatur bestimmt und mit Sollwerten für die betreffende Änderung der Eigenschaften des Gasgemisches verglichen wird, und wobei weiter eine Änderung zwei- oder mehrfach in definierten Zeitabständen verursacht wird, um ein spezielles Änderungsmuster zu erzeugen, welches bei Beobachtung der Reaktion der gemessenen Temperatur wiedererkennbar ist.

Eine alternative Lösung der Aufgabe besteht in einem Verfahren zur Analyse des Zustands zumindest eines Teilvolumens eines von einem Gasgemisch durchströmten katalytischen Konverters, dessen Gesamtvolumen theoretisch in mindestens zwei Teilvolumina zerlegt ist, bei dem während einer Änderung der chemischen und/oder physikalischen Eigenschaften des Gasgemisches mindestens an zwei Stellen oder in zwei Bereichen innerhalb der Teilvolumina mit mindestens einem Sensor eine Temperaturmessung durchgeführt wird, wobei die Stellen oder die Bereiche und die Anordnung des Sensors so gewählt sind, daß die Reaktion dieser gemessenen Temperatur auf die Änderung der Eigenschaften des Gasgemisches zumindest näherungsweise repräsentativ für die Reaktion der Temperatur in den Teilvolumina des katalytischen Konverters ist, und wobei weiter die Reaktion der gemessenen Temperatur bestimmt und mit Sollwerten für die betreffende Änderung der Eigenschaften des Gasgemisches verglichen wird, die anhand eines thermodynamischen Modells unter Berücksichtigung der physikalischen Randbedingungen und der Eigenschaften der Teilvolumina ermittelt werden.

Insbesondere wird als Reaktion die zeitliche Ableitung der gemessenen Temperatur beobachtet, wobei diese zumindest näherungsweise repräsentativ für die zeitliche Änderung der Temperatur in dem Teilvolumen des katalytischen Konverters sein soll, und wobei weiter die zeitliche Ableitung der gemessenen Temperatur bestimmt und mit Sollwerten für die betreffende Änderung der Eigenschaften des Gasgemisches verglichen wird. Insbesondere ist die Höhe des Maximums der zeitlichen Ableitung der gemessenen Temperatur während einer Änderung der Abgaszusammensetzung im Vergleich zu früher bei gleichen Änderungen gemessenen Maxima oder im Vergleich zu Sollwerten sehr aussagekräftig.

Als Reaktion kann auch vorteilhaft das zeitliche Integral der Temperatur über die Zeitdauer der betreffenden Änderung der Abgaszusammensetzung beobachtet werden. Dabei muß gegebenenfalls eine zeitliche Verzögerung der Reaktion im katalytischen Konverter gegenüber der Änderung der Abgaszusammensetzung berücksichtigt werden. Auch muß von dem Integral natürlich der quasikonstante Temperaturanteil der Temperatur, die vor und nach der Änderung gemessen wird, abgezogen werden. Als Ergebnis erhält man dann bildlich gesprochen die Fläche unter dem Temperaturpeak, den die Änderung am Temperaturfühler auslöst.

Da ein Kraftfahrzeug fast ständig transienten Betriebsbedingungen unterworfen ist, kann es schwierig sein, gemessene Temperaturänderungen einer Änderung der Abgaszusammensetzung zuzuordnen und dadurch auf den Zustand des katalytischen Konverters zu schließen. Deshalb ist es besonders vorteilhaft, zwei oder mehrere Änderungen in einer typischen, wiedererkennbaren Folge, einem Änderungsmuster, dem Abgas aufzuprägen. Dies kann periodisch, aperiodisch und wahlweise auch mit verschieden starken Änderungen (Amplituden) erfolgen. Wichtig ist, daß das Änderungsmuster sich von allen denkbaren betriebsbedingten Änderungen unterscheidet, damit eine Temperaturänderung an dem Sensor sicher dem aufgeprägten Änderungsmuster in der Abgaszusammensetzung zugeordnet werden kann. Bei periodischen Änderungsmustern sind besonders Frequenzen geeignet, die so niedrig sind, daß sie von Sensoren noch erfaßt werden können und unterhalb der typischen betriebsbedingten Änderungsfrequenzen liegen. Andererseits müssen die Frequenzen hoch genug sein, um innerhalb eines kurzen Zeitraumes mit konstanten Betriebsbedingungen (Schub, Leerlauf) noch eine genügende Anzahl von Änderungen zu ermöglichen. Geeignete Frequenzen sind vorzugsweise 0,1 bis 10 Hz, insbesondere 0,5 bis 2 Hz.

Weitere vorteilhafte Ausgestaltungen der Erfindung sind in den übrigen abhängigen Ansprüchen beschrieben.

Ein katalytischer Konverter ist im allgemeinen im Neuzustand für alle Betriebszustände überdimensioniert. Das bedeutet, daß über 90% der Schadstoffe schon innerhalb der ersten Zentimeter im Konverter umgewandelt werden. Im Laufe der Katalysatoralterung mit zunehmender Betriebszeit nimmt die Effektivität im vorderen Teil des katalytischen Konverters ab, beispielsweise durch Vergiftung und/oder thermische Alterung. Aus der Tatsache, daß ein weit hinten angeordneter Temperaturfühler bei einer kurzzeitigen Störung kaum eine Änderung seines Meßwertes zeigt, kann daher nicht geschlossen werden, daß der katalytische Konverter seine Funktion nicht erfüllt. Andererseits kann bei einem gealterten katalytischen Konverter, bei dem ein weit vorne angeordneter Temperaturfühler kaum eine Reaktion auf eine Störung des Betriebszustandes des Verbrennungsmotors zeigt, ebenfalls nicht geschlossen werden, daß der katalytische Konverter in seinem übrigen Volumen seine Aufgabe nicht vollständig erfüllt. Dazu kommt, daß sämtliche Sensoren bei einem Kraftfahrzeug sowohl für die Motorsteuerung wie auch für die Überwachung des katalytischen Konverters durch produktionstechnische Toleranzen und Alterung Meßfehler aufweisen und außerdem auch ein katalytischer Konverter bei seiner Fertigung und seinem Einbau erhebliche Toleranzen, insbesondere in der katalytisch aktiven Beschichtung aufweisen kann. Die Auswertung einzelner Temperaturmeßwerte, ihrer differenzierten oder integrierten Signale oder auch von Differenzen zwischen den Meßwerten von Temperaturmeßfühlern ist daher mit so großen Fehlern behaftet, daß eine genaue Auswertung schwer möglich ist. Insbesondere die Festlegung von Grenzwerten, bei deren Erreichen auf eine Fehlfunktion des katalytischen Konverters geschlossen wird, ist äußerst problematisch.

Die vorliegende Erfindung löst dieses Problem besonders günstig durch eine theoretische Unterteilung des katalytischen Konverters in zwei oder mehrere Teilbereiche und die Beobachtung der Reaktion der Temperaturen in mindestens einem dieser Teilbereiche bei Änderungen der chemischen und/oder physikalischen Eigenschaften des den katalytischen Konverter durchströmenden Gasgemisches, d.h. des Betriebszustandes des Verbrennungsmotors. Die beobachteten differenzierten oder integrierten Signale oder ihre Differenzen werden jedoch vorzugsweise nicht mit festen Grenzwerten verglichen, sondern mit theoretischen oder durch Vorversuche bestimmten Sollwertbereichen, wobei im Falle der Messung in zwei oder mehr Teilvolumina bei der Festlegung der Sollwertbereiche des zweiten Teilvolumens und aller folgenden Teilvolumina die tatsächlich gemessenen Werte in allen davorliegenden Teilvolumina berücksichtigt werden, da ansonsten das Bild über die Funktionsfähigkeit des katalytischen Konverters unvollständig bleibt.

Besonders günstig, insbesondere bei katalytischen Konvertern größerer Länge ist es, wenn mindestens in drei Teilvolumina die Temperatur gemessen, deren zeitliche Ableitung bestimmt und der Vergleich mit Sollwertbereichen durchgeführt wird. Da die vorliegende Erfindung in gewisser Weise nach der Methode der finiten Elemente arbeitet, hängt es von der Maschenweite, d. h. dem Abstand der einzelnen Elemente ab, welche Genauigkeit die Ergebnisse haben. Natürlich ist das Ergebnis umso genauer, je mehr Teilvolumina betrachtet und Temperaturen gemessen werden. In weiterer Ausgestaltung der Erfindung werden die Sollwertbereiche anhand einer Modellfunktion, die die funktionalen Zusammenhänge der Temperaturen in verschiedenen Teilvolumina des katalytischen Konverters untereinander und mit den Daten der elektronischen Steuerung des Verbrennungsmotors für den jeweiligen Zustand und/oder die jeweilige Zustandsänderung des Verbrennungsmotors angibt, ermittelt. Vom Verbrennungsmotor stehen Meßgrößen wie der Massenstrom, die Abgastemperatur, das Luft/Brennstoff-Verhältnis usw. zur Verfügung. Aus diesen Werten und aus der bekannten Größe einer Zustandsänderung kann dann auf die im ersten Teilvolumen des katalytischen Konverters zu erwartende Temperaturänderung (für einen bestimmten Alterungszustand des Katalysators) geschlossen werden. Zum Ausgleich von Meßungenauigkeiten und Fertigungstoleranzen wird nun geprüft, ob die gemessene Temperatur innerhalb eines bestimmten vorberechneten Sollwertbereiches liegt oder nicht. Dies liefert die erste Information über den Zustand des katalytischen Konverters. Mit den gleichen Vorgaben unter zusätzlicher Berücksichtigung der gemessenen Temperaturänderung im ersten Teilvolumen kann eine Voraussage für die zu erwartende Temperaturänderung im zweiten Teilvolumen gemacht werden. Auch hier wird wiederum nur geprüft, ob der gemessene Wert der Temperaturänderung innerhalb eines Toleranzbereiches liegt oder nicht. Dieses Verfahren wird für alle Teilbereiche fortgesetzt. Liegen alle gemessenen Temperaturänderungswerte unterhalb der Sollwertbereiche, so erfüllt der katalytische Konverter nicht mehr seine vorgesehene Funktion. Je weiter stromabwärts der gemessene Temperaturänderungswert im Sollwertbereich liegt, desto stärker ist der katalytische Konverter gealtert. Geht man davon aus, daß keine plötzliche Zerstörung des katalytischen Konverters zwischen zwei Meßvorgängen erfolgen kann, so genügt es, nur die Reaktion in einem hinteren Teilvolumen des katalytischen Konverters auf eine Zustandsänderung des Verbrennungsmotors zu überwachen. Ist der Katalysator neu, so sollte sich eine Zustandsänderung dort kaum auswirken, während bei einem immer stärker gealterten katalytischen Konverter die dort auftretenden Temperaturänderungen immer stärker werden. Mit dieser Überwachung allein würden sich allerdings (in der Praxis extrem selten vorkommende) plötzliche Zerstörungen des katalytischen Konverters, schnelle Vergiftungen zwischen zwei Meßvorgängen und vor allem eine Verschlechterung des Zustandes im vorderen Bereich des katalytischen Konverters, der unter anderem für das Kaltstartverhalten mit entscheidend ist, nicht feststellen lassen. Für eine vollständige Überwachung sind daher vorzugsweise mindestens zwei, insbesondere jedoch drei oder mehr Messungen der Temperaturänderungen in verschiedenen Teilvolumina sinnvoll.

Wird als Störung zusätzlicher Kraftstoff in das Abgas gemischt, so ist darauf zu achten, daß die Menge des Kraftstoffes sowie das Verhältnis von Kraftstoff und Luft zum gesamten Abgas-Massenstrom während der Dauer der Störung auf eine optimale Umsetzungsfähigkeit im Volumen des katalytischen Konverters eingestellt werden, insbesondere so, daß die Kraftstoffmenge über die Dauer der Änderung und über die Länge des katalytischen Konverters vollständig umgesetzt werden kann. Dabei sind die Speichereigenschaften des katalytischen Konverters zu berücksichtigen. Auf diese Weise werden gut nachweisbare Meßsignale erzielt, ohne daß jedoch unverbrannte Kohlenwasserstoffe bei der Messung an die Umwelt abgegeben werden.

Im folgenden sei anhand der Zeichnung das Umfeld, die Funktionsweise und eine Ausführungsform beispielhaft beschrieben, und zwar zeigen:
- Fig. 1: eine schematische Darstellung eines Ausführungsbeispiels einer zur Durchführung des erfindungsgemäßen Verfahrens geeignete Anordnung,
- Fig. 2: ein Diagramm mit Kurvenbeispielen für die auftretenden Temperaturänderungen bei Änderungen der Abgaszusammensetzung,
- Fig. 3: ein Diagramm zur Veranschaulichung des zeitlichen Temperaturintegrals über die Dauer einer Änderung.

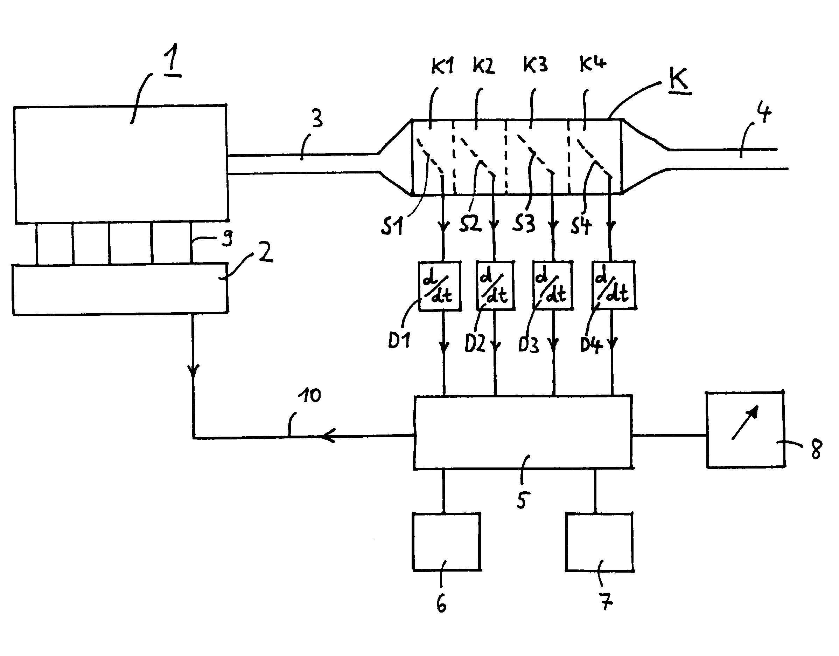

Gemäß Fig. 1 ist einem Verbrennungsmotor 1 mit einer elektronischen Steuerung 2 ein Abgassystem 3, 4 nachgeschaltet, welches einen katalytischen Konverter K enthält. Das Volumen des katalytischen Konverters K umfaßt mehrere (theoretische) Teilvolumina, im vorliegenden Beispiel vier Teilvolumina K1, K2, K3 und K4. In jedem dieser Teilvolumina ist ein Sensor S1, S2, S3 bzw. S4 angeordnet, welcher die Temperatur in diesen Teilvolumen annähernd repräsentativ mißt, vorzugsweise die Temperatur der Trägerstruktur. Ein solcher Sensor kann im einfachsten Falle aus einem punktförmig messenden Sensor bestehen, welcher etwa im Schwerpunkt des jeweiligen Teilvolumens K1, K2, K3 oder K4 liegt. Günstiger ist es jedoch, wenn linienförmige oder flächige Sensoren verwendet werden, da hierdurch die Genauigkeit der Messung steigt. Besonders günstig ist es, wenn nicht nur repräsentativ über einen Querschnitt des Teilvolumens, sondern auch repräsentativ über die axiale Länge des Teilvolumens gemessen wird. Am empfindlichsten ist die Messung dann, wenn die Temperatur der Trägerstruktur, auf die die katalytisch aktive Masse aufgebracht ist, direkt gemessen wird. Dies kann beispielsweise durch an oder in der Trägerstruktur integrierte Sensoren, wie sie aus dem Stand der Technik bekannt sind, erfolgen. Grundsätzlich ist jedoch auch eine Messung mit Sensoren möglich, die die Gastemperatur erfassen, da im katalytischen Konverter immer auch ein Wärmeübergang von der Struktur und der katalytisch aktiven Oberfläche auf das durchströmende Gas stattfindet.

Fig. 2 zeigt beispielhaft ein Diagramm, in dem an der vertikalen Achse die erste Ableitung der Temperatur nach der Zeit d/dt T aufgetragen ist und bei dem die horizontale Achse die Zeit t darstellt. Die durchgezogene Linie stellt die Ableitung der Temperatur des Gases dar, die punktierte Linie die theoretische Temperatur an einem Sensor im katalytischen Konverter ohne Änderung der Gaszusammensetzung, das heißt ohne Erhöhung z. B. der Kohlenwasserstoffzufuhr in dem katalytischen Konverter, und die strichpunktierte Linie die Ableitung der Temperatur an einem Sensor bei Zufuhr von zusätzlichem Kohlenwasserstoff zum Abgas. Bei dieser Messung werden während einer konstanten Belastungsphase des Verbrennungsmotors 1, die bei einem Zeitpunkt t₀ beginnt, zu einem Zeitpunkt t₁ die Kohlenwasserstoffanteile im Abgas erhöht bis zu einem Zeitpunkt t₂. Die Reaktion der Temperatur ist gut erkennbar und es läßt sich auch die Höhe des Maximums der Temperaturänderung feststellen.

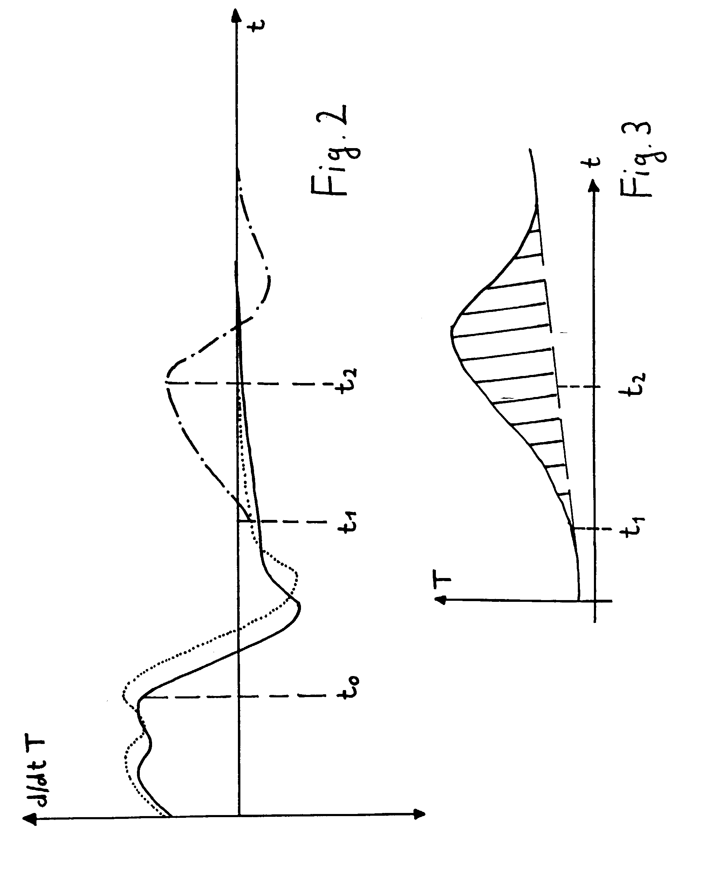

Fig. 3 zeigt beispielhaft die Verhältnisse, wenn das Integral unter einer Temperaturkurve (durchgezogene Linie) während einer Änderung bestimmt wird. Auf der vertikalen Achse ist in diesem Diagramm die Temperatur T aufgestragen und auf der horizontalen Achse die Zeit t. Die schraffierte Fläche entspricht dem Integral der Temperatur über die gesamte Zeit, während der sich eine Änderung auswirkt, wobei der quasikonstante Anteil der Temperatur, d.h. die Fläche unter der theoretischen ungestörten Temperaturkurve (gestrichelte Linie) unberücksichtigt bleibt.

Im Gegensatz zu im Stand der Technik bekannten Meß- und Überwachungsverfahren ist das vorliegende Meßverfahren nicht darauf angewiesen, absolute Temperaturen oder Temperaturdifferenzen zwischen zwei Meßstellen zu ermitteln, sondern es werden in einem oder mehreren der Teilvolumina K1, K2, K3, K4 die zeitlichen Ableitungen der von den Sensoren S1, S2, S3, S4 gemessenen Temperaturen beobachtet, die bei einer Änderung der physikalischen und/oder chemischen Eigenschaften des vom Motor 1 in den katalytischen Konverter K gelangenden Gasgemisches auftreten. Zu diesem Zwecke sind den Sensoren S1, S2, S3, S4 Differenziereinrichtungen D1, D2, D3, D4 nachgeschaltet, deren Ausgangssignale einer Auswerteelektronik 5 zugeführt werden. Die Auswerteelektronik 5 kann über Datenleitungen 10 mit der elektronischen Motorsteuerung 2 verbunden sein, so daß sowohl Daten der Motorsteuerung 2 an die Auswerteelektronik 5 übertragen werden können als auch Zustandswerte des katalytischen Konverters K an die elektronische Motorsteuerung 2. Die Auswerteelektronik 5 steht mit einer ersten Speichereinrichtung 6 für Sollwertbereiche in Verbindung, so daß die gemessenen zeitlichen Ableitungen der Temperaturen T1, T2, T3, T4 mit Sollwertbereichen verglichen werden können. Die Ergebnisse dieses Vergleiches können in einer zweiten Speichereinrichtung 7 für eine spätere Diagnose in einer Fachwerkstatt gespeichert werden und/oder mittels einer Anzeige 8 angezeigt werden. Statt der Differenziereinrichtungen oder zusätzlich können auch Integriereinrichtungen verwendet werden, so daß auch die Flächen unter den Temperaturkurven (ohne den quasikonstanten Anteil) während einer Änderung zur Auswertung zur Verfügung stehen.

Um den Zustand des katalytischen Konverters K zu analysieren, bedarf es einer Änderung der chemischen und/oder physikalischen Eigenschaften der aus dem Motor 1 austretenden Abgase. Eine solche Änderung muß, um eine sinnvolle Zustandsanalyse durchführen zu können, mit einer bestimmten Genauigkeit definiert sein. Hier kommen viele im Alltagsbetrieb vorkommende Zustandsänderungen in Betracht, beispielsweise eine Beschleunigungsphase nach einer Phase konstanter Last, eine Schubabschaltung nach einer Phase konstanter Last, ein Kaltstart nach einem längeren Stillstand oder ähnliches. Durch Analyse der Reaktion der zeitlichen Ableitungen der Temperaturen T1, T2, T3, T4 auf verschiedene Zustandsänderungen können verschiedene Aspekte der Funktion eines katalytischen Konverters überprüft werden. So kann während einer Kaltstartphase der Beginn der katalytischen Reaktion im katalytischen Konverter K festgestellt werden und das Teilvolumen, in welchem die erste Umsetzung stattfindet. Bei anderen Zustandsänderungen des Verbrennungsmotors, bei denen sich beispielsweise nur die Temperatur der Abgase, nicht jedoch ihre chemische Zusammensetzung ändert, kann überprüft werden, ob sämtliche Meßfühler noch korrekt, nämlich in diesem Falle mit einer Zeitverzögerung von vorne nach hinten messen.

Besonders günstig ist es, wenn der Betriebszustand des Verbrennungsmotors 1 über die elektronische Steuerung, die den Motor über Steuerungsleitungen 9 steuert, kurzzeitig, insbesondere mit einem definierten Änderungsmuster, gestört wird. Dies kann beispielsweise in ansich bekannter Weise durch eine kurzzeitige Einspritzung von zusätzlichem Kraftstoff bei gleichzeitigem Abschalten der Zündung während einer Schubphase erfolgen. Die Einspritzung kann dabei auch nach einem definierten Änderungsmuster erfolgen. Das Angebot an zusätzlicher chemischer Energie im Abgas löst in dem ersten noch funktionsfähigen Teilvolumen des katalytischen Konverters K eine starke Reaktion der Temperatur aus, deren zeitliche Ableitung oder Integral gebildet und von der Auswerteelektronik 5 analysiert werden können.

Anders als für die im Stand der Technik bekannten Verfahren spielt es bei dem erfindungsgemäßen Verfahren keine Rolle, welche Temperaturverteilung zum Zeitpunkt der Messung gerade im katalytischen Konverter vorliegt. Gerade dies ist ein entscheidender Vorteil. Je nach den Betriebsbedingungen, die ein Kraftfahrzeug vor einer Messung durchlaufen hat, können nämlich in einem katalytischen Konverter verschiedene Temperaturverteilungen vorliegen. Es gibt Zustände, in denen der katalytische Konverter in seinem vorderen Bereich wesentlich heißer als in seinem hinteren Bereich ist, andere mit eher gleichmäßiger Temperaturverteilung und auch Zustände, bei denen der katalytische Konverter hinten heißer als vorne ist. Diese Tatsache verfälscht alle nach dem Stand der Technik bekannten Meßverfahren, welche darauf beruhen, die zwischen zwei Meßbereichen freiwerdende thermische Energie zu messen. Die bisherige Betrachtungsweise ging davon aus, daß die Meßfühler das zwischen Ihnen befindliche Volumen überwachen, während die vorliegende Erfindung nach der Methode der finiten Elemente davon ausgeht, daß die Meßfühler das sie umgebende Teilvolumen und die dort auftretenden Temperaturänderungen separat überwachen.

Natürlich muß die Zahl der dafür notwendigen Sensoren nicht dem hier dargestellten Ausführungsbeispiel entsprechen. Die Genauigkeit der Messung steigt zwar mit zunehmender Zahl an Sensoren, jedoch ist, wie oben erwähnt, das erfindungsgemäße Verfahren sogar schon dann in gewissem Umfange aussagefähig, wenn nur ein einziger Sensor ein einziges Teilvolumen überwacht und die dort bei Betriebsänderungen auftretenden zeitlichen Ableitungen und/oder Integrale der Temperatur mit Sollwertbereichen und/oder früher gemessenen Werten vergleicht. Das Verfahren ist sowohl für monolitische katalytische Konverter wie auch für aus mehreren Teilkörpern bestehende katalytische Konverter geeignet und kann ebenso Sensoren in sogenannten Vor- oder Startkatalysatoren und/oder in elektrisch beheizbaren katalytischen Konvertern mit einbeziehen. Die Sensoren S1, S2, S3, S4 können selbstverständlich auch zur Messung der absoluten Temperaturen und/oder des Temperaturprofils im katalytischen Konverter herangezogen werden, zumindest in einem Temperaturbereich von beispielsweise unterhalb 500° C, in dem die meisten Temperaturfühler noch verhältnismäßig genau messen können. Solche Messungen liefern beispielsweise Aussagen über das Kaltstartverhalten des katalytischen Konverters. In vielen Fällen kann es erforderlich sein, eine vorhandene Lamdaregelung bei der Messung auszuschalten, damit diese nicht eine gezielt aufgebrachte Störung wieder "ausregelt".

Die Erfindung eignet sich besonders für die ständige Betriebsüberwachung von katalytischen Konvertern in Kraftfahrzeugen zur Sicherstellung der Einhaltung von strengen Abgasbestimmungen.

## Patentansprüche

1. Verfahren zur Analyse des Zustands zumindest eines Teilvolumens (K1, K2, K3, K4,...) eines von einem Gasgemisch durchströmten katalytischen Konverters (K), bei dem während einer Änderung der chemischen und/oder physikalischen Eigenschaften des Gasgemisches mindestens an einer Stelle oder in einem Bereich innerhalb des Teilvolumens (K1, K2, K3, K4,...) mit einem Sensor (S1, S2, S3, S4,...) eine Temperaturmessung durchgeführt wird, wobei die Stelle oder der Bereich und die Anordnung des Sensors (S1, S2, S3, S4,...) so gewählt sind, daß die Reaktion dieser gemessenen Temperatur (T) auf die Änderung der Eigenschaften des Gasgemisches zumindest näherungsweise repräsentativ für die Reaktion der Temperatur in dem Teilvolumen (K1, K2, K3, K4,...) des katalytischen Konverters (K) ist, und wobei weiter die Reaktion der gemessenen Temperatur bestimmt und mit Sollwerten für die betreffende Änderung der Eigenschaften des Gasgemisches verglichen wird, dadurch gekennzeichnet, daß eine Änderung zwei- oder mehrfach in definierten Zeitabständen verursacht wird, um ein spezielles Änderungsmuster zu erzeugen, welches bei Beobachtung der Reaktion der gemessenen Temperatur wiedererkennbar ist.

2. Verfahren zur Analyse des Zustands zumindest eines Teilvolumens (K1, K2, K3, K4,...) eines von einem Gasgemisch durchströmten katalytischen Konverters (K), dessen Gesamtvolumen theoretisch in mindestens zwei Teilvolumina zerlegt ist, bei dem während einer Änderung der chemischen und/oder physikalischen Eigenschaften des Gasgemisches mindestens an zwei Stellen oder in zwei Bereichen innerhalb der Teilvolumina (K1, K2, K3, K4,...) mit mindestens einem Sensor (S1, S2, S3, S4,...) eine Temperaturmessung durchgeführt wird, wobei die Stellen oder die Bereiche und die Anordnung des Sensors (S1, S2, S3, S4,...) so gewählt sind, daß die Reaktion dieser gemessenen Temperatur (T) auf die Änderung der Eigenschaften des Gasgemisches zumindest näherungsweise repräsentativ für die Reaktion der Temperatur in den Teilvolumenina (K1, K2, K3, K4,...) des katalytischen Konverters (K) ist, und wobei weiter die Reaktion der gemessenen Temperatur bestimmt und mit Sollwerten für die betreffende Änderung der Eigenschaften des Gasgemisches verglichen wird, die anhand eines thermodynamischen Modells unter Berücksichtigung der physikalischen Randbedingungen und Eigenschaften der Teilvolumina (K1, K2, K3, K4,...) ermittelt werden.

3. Verfahren nach Anspruch 1 oder 2, wobei als Reaktion die zeitliche Ableitung (d/dt T) dieser gemessenen Temperatur beobachtet wird und wobei die Stelle oder der Bereich und die Anordnung des Sensors (S1, S2, S3, S4,...) so gewählt sind, daß die zeitliche Ableitung (d/dt T) dieser gemessenen Temperatur (T) zumindest näherungsweise repräsentativ für die zeitliche Änderung der Temperatur in dem Teilvolumen (K1, K2, K3, K4,...) des katalytischen Konverters (K) ist, und wobei weiter die zeitliche Ableitung der gemessenen Temperatur bestimmt und mit Sollwerten für die betreffende Änderung der Eigenschaften des Gasgemisches verglichen wird.

4. Verfahren nach Anspruch 3 wobei das Maximum der zeitlichen Ableitung der Temperatur (d/dt T) während der Dauer der Änderung bestimmt wird.

5. Verfahren nach Anspruch 4, wobei das während der Dauer einer Änderung bestimmte Maximum mit Sollwerten oder früher bei gleichen Änderungen gemessenen Maxima verglichen wird.

6. Verfahren nach Anspruch 1 oder 2, wobei als Reaktion das zeitliche Integral der Temperatur über die Zeitdauer der betreffenden Änderung beobachtet wird, gegebenenfalls verzögert um eine im katalytischen Konverter (K) auftretende Reaktionsverzögerungszeit.

7. Verfahren nach einem der Ansprüche 2 bis 6, wobei eine Änderung zwei- oder mehrfach in definierten Zeitabständen verursacht wird, um ein spezielles, von allen denkbaren sonstigen Betriebsbedingungen des Verbrennungsmotors abweichendes Änderungsmuster zu erzeugen, welches bei Beobachtung der Reaktion der gemessenen Temperatur wiedererkennbar ist.

8. Verfahren nach Anspruch 1 oder 7, wobei das Änderungsmuster eine periodische Änderung ist, vorzugsweise mit einer Frequenz von 0,1 bis 10 Hz, insbesondere 0,5 bis 2 Hz.

9. Verfahren nach Anspruch 1 oder 7, wobei das Änderungsmuster eine aperiodische Änderung ist, vorzugsweise aus mindestens drei Änderungen besteht.

10. Verfahren nach Anspruch 1, 7, 8 oder 9, wobei die Änderungen unterschiedliche Stärke haben.

11. Verfahren nach einem der vorhergehenden Ansprüche, wobei die Änderung der Eigenschaften des Gasgemisches eine, vorzugsweise plötzliche und kurzzeitige, Erhöhung des Gehaltes an chemischer Energie in dem Gasgemisch ist.

12. Verfahren nach Anspruch 11, wobei die Erhöhung der chemischen Energie in einer Phase ansonsten konstanter oder genau bekannter Betriebsbedingungen des katalytischen Konverters (K) durch zusätzliche Zufuhr von katalytisch umsetzbaren Bestandteilen, insbesondere Kohlenwasserstoffen, erfolgt.

13. Verfahren nach einem der vorhergehenden Ansprüche, wobei der katalytische Konverter (K) zur Abgasreinigung einem Verbrennungsmotor (1) mit elektronischer Steuerung (2) nachgeschaltet ist und die Änderung der Eigenschaften des Gasgemisches aufgrund einer Betriebsänderung des Verbrennungsmotors (1) erfolgt.

14. Verfahren nach Anspruch 12 oder 13, wobei die kurzzeitige Erhöhung des Gehaltes an chemischer Energie in dem Gasgemisch so erfolgt, daß die Menge des Kraftstoffes sowie das Verhältnis von Kraftstoff und Luft zum gesamten Gasmassenstrom im katalytischen Konverter (K) während der Dauer der Änderung auf eine optimale Umsetzungsfähigkeit im Volumen des katalytischen Konverters (K) eingestellt werden, insbesondere so, daß die Kraftstoffmenge über die Dauer der Änderung und über die Länge des katalytischen Konverters (K) vollständig umgesetzt werden kann.

15. Verfahren nach Anspruch 13, wobei die Betriebsänderung eine plötzliche Änderung der Temperatur des Gasgemisches bewirkt.

16. Verfahren nach Anspruch 13, 14 oder 15, wobei die Betriebsänderung eine plötzliche Änderung des Massenstromes des Gasgemisches bewirkt.

17. Verfahren nach einem der vorhergehenden Ansprüche, wobei eine Auswerteelektronik (5) die ermittelten zeitlichen Ableitungen der Temperatur (d/dt T1, d/dt T2, d/dt T3, d/dt T4,...) in dem Teilvolumen (K1, K2, K3, K4,...) mit früher für gleiche Zustandsänderungen des Gasgemisches ermittelten Werten, mit an einem anderen katalytischen Konverter ermittelten Werten und/oder mit theoretisch aufgrund von Modellrechnungen ermittelten Sollwerten vergleicht.

18. Verfahren nach einem der vorhergehenden Ansprüche, wobei das analysierte Teilvolumen (K4) im katalytischen Konverter (K) im Bereich des abströmseitigen Endes liegt.

19. Verfahren nach einem der Ansprüche 1 oder 3 bis 18, wobei die Zustände von zwei oder mehr Teilvolumina (K1, K2, K3, K4,...) durch eine entsprechende Anzahl von Temperaturmessungen analysiert werden.

20. Verfahren nach Anspruch 19, wobei das Gesamtvolumen des katalytischen Konverters (K) als aus mehreren Teilvolumina (K1, K2, K3, K4,...) bestehend betrachtet wird und wobei der Zustand jedes Teilvolumens (K1, K2, K3, K4,...) durch möglichst gleichzeitige Bestimmung von annähernd repräsentativen zeitlichen Ableitungen der Temperatur (d/dt T1, d/dt T2, d/dt T3, d/dt T4 ...) bei Änderungen der Eigenschaften des Gasgemisches ermittelt und die einzelnen ermittelten Zustände zu einem Gesamtbild über den Gesamtzustand des katalytischen Konverters (K) zusammengeführt werden.

21. Verfahren nach einem der vorhergehenden Ansprüche, wobei die unterschiedlichen Änderungen der zeitlichen Ableitungen der Temperatur (d/dt T1, d/dt T2, d/dt T3, d/dt T4 ...) bei unterschiedlichen Arten von Änderungen der Eigenschaften des Gasgemisches registriert und analysiert werden, um Aussagen über den Zustand des Teilvolumens (K1, K2, K3, K4,...) bezüglich verschiedener Funktionen, z.B. Konvertierungsvermögen und Kaltstartverhalten, zu gewinnen.

22. Verfahren nach einem der vorhergehenden Ansprüche, wobei jeder Temperatursensor (S1, S2, S3, S4,...), soweit technisch möglich, die Temperatur an der Wärmequelle, d.h. an der katalytisch aktiven Schicht, mißt.

23. Verfahren nach Anspruch 22, wobei jeder Temperatursensor (S1, S2, S3, S4,...) in innigem Wärmekontakt mit der Trägerstruktur des katalytischen Konverters (K) steht, vorzugsweise in die Wände der Trägerstruktur integriert ist.

24. Verfahren nach Anspruch 22, wobei jeder Temperatursensor (S1, S2, S3, S4,...) so in der Strömung des Gasgemisches angeordnet ist, daß ein guter Wärmeübergang von der Trägerstruktur über das Gasgemisch auf den Temperatursensor (S1, S2, S3, S4,...) ermöglicht wird.

25. Verfahren nach Anspruch 13, wobei Sollwertbereiche anhand einer Modellfunktion, die die funktionalen Zusammenhänge der Temperaturen (T1, T2, T3, T4, ...) in verschiedenen Teilvolumina (K1, K2, K3, K4,...) des katalytischen Konverters (K) untereinander und mit den Daten aus der elektronischen Steuerung (2) des Verbrennungsmotors (1) für den jeweiligen Zustand und/oder die jeweilige Zustandsänderung des Verbrennungsmotors (1) ermittelt werden.

26. Verfahren nach Anspruch 25, wobei die Größe der Sollwertbereiche Toleranzen berücksichtigt, die sich beispielsweise durch Ungenauigkeiten von Sensoren, durch Fertigungstoleranzen bei den katalytischen Konvertern (K) und/oder durch Abweichungen bei der Gemischaufbereitung des Verbrennungsmotors (1) ergeben können.

27. Verfahren nach einem der vorhergehenden Ansprüche, wobei ein vorbestimmter genau festgelegter Zustand des Verbrennungsmotors (1) gezielt gestört wird und die Reaktion der zeitlicher Ableitungen (d/dt T1, d/dt T2, d/dt T3, d/dt T4, ...) auf diese Störung mit vorgegebenen Sollwertbereichen verglichen wird.

28. Verfahren nach Anspruch 25, wobei die Störung nach einer längeren Phase mit konstanter Leistung in einer Phase der Schubabschaltung durch kurzzeitiges Einspritzen von Kraftstoff bei abgeschalteter Zündung in eine oder mehrere Brennkammern erfolgt.

29. Verfahren nach einem der vorhergehenden Ansprüche, wobei ein bestimmter transienter Vorgang des Motors, z. B. eine Kaltstartphase oder eine Beschleunigungsphase mit seiner Auswirkung auf die zeitlichen Ableitungen (d/dt T1, d/dt T2, d/dt T3, d/dt T4,...) beobachtet wird.

30. Verfahren nach einem der Ansprüche 25 bis 29 mit folgenden Schritten:
a. für ein erstes Teilvolumen (K1) wird anhand einer Modellfunktion die dort zu erwartende zeitliche Ableitung der Temperatur (d/dt T1') bestimmt, indem aus in der Motorsteuerung verfügbaren Daten, z.B. über die Drehzahl, den Massendurchsatz, die eingeführte Brennstoffmenge und die Motortemperatur, die Abgastemperatur und die im katalytischen Konverter freigesetzte Energie berechnet werden;
b. die in dem ersten Teilvolumen (K1) gemessene Temperatur (T1) und/oder deren zeitliche Ableitung (d/dt T1) werden mit der berechneten Temperatur (T1') und deren zeitlicher Ableitung (d/dt T1') verglichen, wobei Abweichungen außerhalb eines Sollwertbereiches registriert werden;
c. die in einem nachfolgenden Teilvolumen (K2, K3, K4, ...) zu erwartende zeitliche Ableitung (d/dt T2', d/dt T3', d/dt T4', ...) wird anhand einer Modellfunktion berechnet, welche die aus der Motorsteuerung verfügbaren Daten und die in den davorliegenden Teilvolumina (K1) gemessenen zeitlichen Ableitungen (d/dt T1) berücksichtigt;
d. die in dem nachfolgenden Teilvolumen (K2, K3, K4, ...) gemessene zeitliche Ableitung (d/dt T2, d/dt T3, d/dt T4,...) wird mit der berechneten zeitlichen Ableitung (d/dt T2', d/dt T3', d/dt T4', ...) verglichen, wobei Abweichungen außerhalb eines Sollwertbereiches registriert werden;
e. aus den registrierten Abweichungen wird ermittelt, ob und in welchem Umfang der katalytische Konverter (K) insgesamt noch seine Funktion erfüllt und welche Teilvolumina (K1, K2, K3, K4) gegebenenfalls wie stark geschädigt sind.

31. Verfahren nach einem der vorhergehenden Ansprüche, wobei das erste Teilvolumen (Kl) in einem Vorkatalysator und das zweite (K2) und die folgenden Teilvolumen (K3, K4, ...) in verschieden Querschnittsbereichen oder Teilkörpern eines Hauptkatalysators liegen.

32. Verfahren nach einem der vorhergehenden Ansprüche, wobei die Temperaturmessungen mittels punktueller Temperatursensoren oder mittels repräsentativ über ein Teilvolumen des katalytischen Konverters messender Temperatursensoren (S1, S2, S3, S4, ...) durchgeführt werden.

33. Verfahren nach einem der vorhergehenden Ansprüche, wobei eine eventuell vorhandene Lamda-Regelung des katalytischen Konverters (K) während der Überprüfung abgeschaltet wird.

## Claims

1. A method of analysing the condition of at least one partial volume (K1, K2, K3, K4, ...) of a catalytic converter (K) through which a gas mixture flows, in which a temperature measurement operation is effected during a change in the chemical and/or physical properties of the gas mixture at least at one location or region within the partial volume (K1, K2, K3, K4, ...) with a sensor (S1, S2, S3, S4, ...), wherein the location or region and the arrangement of the sensor (S1, S2, S3, S4, ...) are so selected that the reaction of said measured temperature (T) to the change in the properties of the gas mixture is at least approximately representative of the reaction of the temperature in the partial volume (K1, K2, K3, K4,...) of the catalytic converter (K), and wherein moreover the reaction of the measured temperature is determined and compared to reference values for the change in question in the properties of the gas mixture, characterised in that a change is caused two or more times at defined time intervals in order to produce a specific change pattern which is recognisable when observing the reaction of the measured temperature.

2. A method of analysing the condition of at least one partial volume (K1, K2, K3, K4, ...) of a catalytic converter (K) through which a gas mixture flows and whose overall volume is theoretically broken down into at least two partial volumes, in which a temperature measurement operation is effected during a change in the chemical and/or physical properties of the gas mixture at least at two locations or two regions within the partial volumes (K1, K2, K3, K4,...) with at least one sensor (S1, S2, S3, S4,...), wherein the locations or regions and the arrangement of the sensor (S1, S2, S3, S4, ...) are so selected that the reaction of said measured temperature (T) to the change in the properties of the gas mixture is at least approximately representative of the reaction of the temperature in the partial volumes (K1, K2, K3, K4, ...) of the catalytic converter (K), wherein moreover the reaction of the measured temperature is determined and compared to reference values for the change in question of the properties of the gas mixture which are ascertained on the basis of a thermodynamic model having regard to the physical boundary conditions and properties of the partial volumes (K1, K2, K3, K4, ...).

3. A method according to claim 1 or claim 2 wherein the time derivative (d/dt T) of said measured temperature is observed as the reaction and wherein the location or region and the arrangement of the sensor (S1, S2, S3, S4, ...) are so selected that the time derivative (d/dt T) of said measured temperature (T) is at least approximately representative of the change in respect of time of the temperature in the partial volume (K1, K2, K3, K4, ...) of the catalytic converter (K), and wherein moreover the time derivative of the measured temperature is determined and compared to reference values for the change in question of the properties of the gas mixture.

4. A method according to claim 3 wherein the maximum of the time derivative of the temperature (d/dt T) is determined during the duration of the change.

5. A method according to claim 4 characterised in that the maximum determined during the duration of a change is compared to reference values or maxima measured earlier with the same changes.

6. A method according to claim 1 or claim 2 wherein the time integral of the temperature over the duration of the change in question is observed as the reaction, possibly delayed by a reaction delay time occurring in the catalytic converter (K).

7. A method according to one of claims 2 to 6 wherein a change is caused two or more times at defined time intervals, in order to produce a specific change pattern which differs from all other conceivable operating conditions of the internal combustion engine and which is recognisable upon observing the reaction of the measured temperature.

8. A method according to claim 1 or claim 7 wherein the change pattern is a periodic change, preferably at a frequency of 0.1 to 10 Hz, in particular 0.5 to 2 Hz.

9. A method according to claim 1 or claim 7 wherein the change pattern is an aperiodic change, preferably comprising at least three changes.

10. A method according to claims 1, 7, 8 or 9 wherein the changes are of different magnitudes.

11. A method according to one of the preceding claims wherein the change in the properties of the gas mixture is a preferably sudden and short-term increase in the content of chemical energy in the gas mixture.

12. A method according to claim 11 wherein the increase in the chemical energy occurs in a phase of otherwise constant or accurately known operating conditions of the catalytic converter (K) due to the additional feed of catalytically convertable constituents, in particular hydrocarbons.

13. A method according to one of the preceding claims wherein the catalytic converter (K) is connected downstream of an internal combustion engine (1) with electronic management (2), for exhaust gas cleaning, and the change in the properties of the gas mixture occurs due to an operating change in the internal combustion engine (1).

14. A method according to claim 12 or claim 13 wherein the short-term increase in the content of chemical energy in the gas mixture occurs in such a way that the amount of fuel and the ratio of fuel and air to the total gas mass flow in the catalytic converter (K) are adjusted during the duration of the change to an optimum conversion capability in the volume of the catalytic converter (K), in particular in such a way that the amount of fuel can be completely converted over the duration of the change and over the length of the catalytic converter (K).

15. A method according to claim 13 wherein the operating change causes a sudden change in the temperature of the gas mixture.

16. A method according to claim 13, claim 14 or claim 15 wherein the operating change causes a sudden change in the mass flow of the gas mixture.

17. A method according to one of the preceding claims wherein an electronic evaluation means (5) compares the ascertained time derivatives of temperature (d/dt T1, d/dt T2, d/dt T3, d/dt T4, ...) in the partial volume (K1, K2, K3, K4, ...) to values ascertained earlier for identical changes in condition of the gas mixture, values ascertained at another catalytic converter and/or reference values ascertained theoretically on the basis of model calculations.

18. A method according to one of the preceding claims wherein the analysed partial volume (K1) is in the catalytic converter (K) in the region of the downstream end.

19. A method according to one of claims 1 or 3 to 18 wherein the conditions of two or more partial volumes (K1, K2, K3, K4, ...) are analysed by a corresponding number of temperature measurement operations.

20. A method according to claim 19 wherein the overall volume of the catalytic converter (K) is considered as comprising a plurality of partial volumes (K1, K2, K3, K4, ...) and wherein the condition of each partial volume (K1, K2, K3, K4, ...) is ascertained by determining as simultaneously as possible approximately representative time derivatives of temperature (d/dt T1, d/dt T2, d/dt T3, d/dt T4, ...) upon changes in the properties of the gas mixture and the individual conditions ascertained are assembled to form an overall picture about the overall condition of the catalytic converter (K).

21. A method according to one of the preceding claims wherein the different changes in the time derivatives of temperature (d/dt T1, d/dt T2, d/dt T3, d/dt T4, ...) are recorded and analysed in relation to different kinds of changes in the properties of the gas mixture in order to obtain information about the condition of the partial volume (K1, K2, K3, K4, ...) in respect of different functions, for example conversion capability and cold-start performance.

22. A method according to one of the preceding claims wherein each temperature sensor (S1, S2, S3, S4, ...), as far as technically possible, measures the temperature at the heat source, that is to say at the catalytically active layer.

23. A method according to claim 22 wherein each temperature sensor (S1, S2, S3, S4, ...) is in intimate thermal contact with the carrier structure of the catalytic converter (K), and is preferably integrated into the wall of the carrier structure.

24. A method according to claim 22 wherein each temperature sensor (S1, S2, S3, S4, ...) is so arranged in the flow of the gas mixture that a good heat transfer from the carrier structure to the temperature sensor (S1, S2, S3, S4, ...) by way of the gas mixture is made possible.

25. A method according to claim 13 wherein reference value ranges are ascertained on the basis of a model function which determines the functional interrelationships of the temperatures (T1, T2, T3, T4, ...) in different partial volumes (K1, K2, K3, K4, ...) of the catalytic converter (K) with each other and with the data from the electronic management (2) of the internal combustion engine (1) for the respective condition and/or the respective change in condition of the internal combustion engine (1).

26. A method according to claim 25 wherein the magnitude of the reference value ranges takes account of tolerances which can occur for example due to inaccuracies of sensors, production tolerances in the catalytic converters (K) and/or deviations in mixture preparation of the internal combustion engine (1).

27. A method according to one of the preceding claims wherein a predetermined, precisely established condition of the internal combustion engine (1) is deliberately disturbed and the reaction of the time derivatives (d/dt T1, d/dt T2, d/dt T3, d/dt T4, ...) to said disturbance is compared to predetermined reference value ranges.

28. A method according to claim 25 wherein the disturbance occurs after a prolonged phase at constant power in a phase of overun shut-down by briefly injecting fuel into one or more combustion chambers with the ignition switched off.

29. A method according to one of the preceding claims wherein a given transient event of the engine, for example a cold-start phase or an acceleration phase is observed with its effect on the time derivatives (d/dt T1, d/dt T2, d/dt T3, d/dt T4, ...).

30. A method according to one of claims 25 to 29 with the following steps:
a) for a first partial volume (K1) the time derivative of temperature (d/dt T1') to be expected there is determined on the basis of a model function, by calculating the exhaust gas temperature and the energy liberated in the catalytic converter from data available in the engine management, for example relating to the speed of rotation, mass throughput, amount of fuel introduced and the engine temperature;
b) the temperature (T1) measured in the first partial volume (K1) and/or the time derivative (d/dt T1) thereof are compared to the calculated temperature (T1') and the time derivative (d/dt T1') thereof, wherein deviations outside a reference value range are recorded;
c) the time derivative (d/dt T2', d/dt T3', d/dt T4', ...) to be expected in a subsequent partial volume (K2, K3, K4, ...) is calculated on the basis of a model function which takes account of the data available from the engine management and the time derivatives (d/dt T1) measured in the preceding partial volume (K1);
d) the time derivative (d/dt T2, d/dt T3, d/dt T4, ...) measured in the subsequent partial volume (K2, K3, K4, ...) is compared to the calculated time derivative (d/dt T2', d/dt T3', d/dt T4', ...) wherein deviations outside a reference value range are recorded; and
e) it is ascertained from the recorded deviations whether and to what extent the catalytic converter (K) overall is still performing its function and which partial volumes (K1, K2, K3, K4) are damaged possibly to what extent.

31. A method according to one of the preceding claims wherein the first partial volume (K1) is in a pre-catalyst and the second partial volume (K2) and the following partial volumes (K3, K4, ...) are in different cross-sectional regions or partial bodies of a main catalyst.

32. A method according to one of the preceding claims wherein the temperature measurement operations are performed by means of point temperature sensors or by means of temperature sensors (S1, S2, S3, S4, ...) measuring representatively over a partial volume of the catalytic converter.

33. A method according to one of the preceding claims wherein a lambda regulation of the catalytic converter (K), if provided, is switched off during the checking procedure.

## Revendications

1. Procédé destiné à l'analyse de l'état d'au moins un volume partiel (K1, K2, K3, K4, ...) d'un convertisseur catalytique (K) traversé par un mélange gazeux, selon lequel une mesure de température est effectuée par un capteur (S1, S2, S3, S4, ...) en au moins un emplacement ou dans une zone à l'intérieur du volume partiel (K1, K2, K3, K4, ...) pendant une modification des propriétés chimiques et/ou physiques du mélange gazeux, l'emplacement ou la zone, et la disposition du capteur (S1, S2, S3, S4, ...), étant choisis de telle sorte que la réaction de cette température (T) mesurée à la modification des propriétés du mélange gazeux soit au moins approximativement représentative pour la réaction de la température dans le volume partiel (K1, K2, K3, K4, ...) du convertisseur catalytique (K), et la réaction de la température mesurée étant en outre définie et comparée avec des valeurs de consigne pour la modification concernée des propriétés du mélange gazeux, caractérisé en ce qu'une modification est provoquée à deux ou plusieurs reprises à des intervalles de temps définis afin de générer un modèle spécifique de modifications, lequel est reconnaissable lors de l'observation de la réaction de la température mesurée.

2. Procédé destiné à l'analyse d'au moins un volume partiel (K1, K2, K3, K4, ...) d'un convertisseur catalytique (K) traversé par un mélange gazeux, dont le volume total est décomposé théoriquement en deux volumes partiels au moins, selon lequel une mesure de température est effectuée par au moins un capteur (S1, S2, S3, S4, ...) en au moins deux emplacements ou dans deux zones à l'intérieur des volumes partiels (K1, K2, K3, K4, ...) pendant une modification des propriétés chimiques et/ou physiques du mélange gazeux, les emplacements ou les zones, et la disposition du capteur (S1, S2, S3, S4, ...), étant choisis de telle sorte que la réaction de cette température (T) mesurée à la modification des propriétés du mélange gazeux soit au moins approximativement représentative pour la réaction de la température dans les volumes partiels (K1, K2, K3, K4, ...) du convertisseur catalytique (K), et la réaction de la température mesurée étant en outre définie et comparée avec des valeurs de consigne pour la modification concernée des propriétés du mélange gazeux, qui sont déterminées à l'aide d'un modèle thermodynamique tenant compte des conditions marginales et des propriétés physiques des volumes partiels (K1, K2, K3, K4, ...).

3. Procédé selon la revendication 1 ou 2, selon lequel la dérivée dans le temps (d/dt T) de cette température mesurée est observée, et selon lequel l'emplacement ou la zone, et la disposition du capteur (S1, S2, S3, S4, ...), sont choisis de telle sorte que la dérivée dans le temps (d/dt T) de cette température (T) mesurée soit au moins approximativement représentative pour la variation dans le temps de la température dans le volume partiel (K1, K2, K3, K4, ...) du convertisseur catalytique (K), et la dérivée dans le temps de la température mesurée étant en outre définie et comparée avec des valeurs de consigne pour la modification concernée des propriétés du mélange gazeux.

4. Procédé selon la revendication 3, selon lequel le maximum de la dérivée dans le temps de la température (d/dt T) est défini pendant la durée de la modification.

5. Procédé selon la revendication 4, selon lequel le maximum défini pendant la durée d'une modification est comparé avec des valeurs de consigne ou avec des maxima mesurés auparavant lors de modifications identiques.

6. Procédé selon la revendication 1 ou 2, selon lequel l'intégrale dans le temps de la température est observée en tant que réaction pendant la durée de la modification concernée, retardée le cas échéant d'un temps de retard de réaction intervenant dans le convertisseur catalytique (K).

7. Procédé selon l'une quelconque des revendications 2 à 6, selon lequel une modification est provoquée à deux ou plusieurs reprises à des intervalles de temps définis afin de générer un modèle spécifique de modifications, qui est différent de toutes les autres conditions de fonctionnement envisageables du moteur à combustion interne, lequel est reconnaissable lors de l'observation de la réaction de la température mesurée.

8. Procédé selon la revendication 1 ou 7, selon lequel le modèle de modifications est une modification périodique d'une fréquence qui est de préférence de 0,1 à 10 Hz, notamment de 0,5 à 2 Hz.

9. Procédé selon la revendication 1 ou 7, selon lequel le modèle de modifications est une modification apériodique constituée de préférence d'au moins trois modifications.

10. Procédé selon les revendications 1, 7, 8 ou 9, selon lequel les modifications sont d'intensité variable.

11. Procédé selon l'une quelconque des revendications précédentes, selon lequel la modification des propriétés du mélange gazeux est une augmentation, de préférence soudaine et de courte durée, de la teneur en énergie chimique dans le mélange gazeux.

12. Procédé selon la revendication 11, selon lequel l'augmentation de l'énergie chimique est effectuée par l'apport de composés convertibles, notamment d'hydrocarbures, dans une phase dans laquelle les conditions de fonctionnement du convertisseur catalytique (K) sont normalement constantes ou exactement connues.

13. Procédé selon l'une quelconque des revendications précédentes, selon lequel le convertisseur catalytique (K) est disposé en aval d'un moteur à combustion interne (1) à commande électronique (2) pour l'épuration des gaz d'échappement, et selon lequel la modification des propriétés du mélange gazeux est effectuée en raison d'une modification du régime du moteur à combustion interne (1).

14. Procédé selon la revendication 12 ou 13, selon lequel l'augmentation de courte durée de la teneur en énergie chimique dans le mélange gazeux est effectuée de telle sorte que la quantité de carburant, ainsi que la proportion de carburant et d'air par rapport à l'ensemble du flux massique gazeux dans le convertisseur catalytique (K), sont réglées pendant la durée de la modification à une capacité de conversion optimale dans le volume du convertisseur catalytique (K), notamment de telle sorte que la quantité de carburant puisse être convertie entièrement pendant la durée de la modification et sur la longueur du convertisseur catalytique (K).

15. Procédé selon la revendication 13, selon lequel la modification du régime provoque une variation soudaine de la température du mélange gazeux.

16. Procédé selon les revendications 13, 14 ou 15, selon lequel la modification du régime provoque une modification soudaine du flux massique du mélange gazeux.

17. Procédé selon l'une quelconque des revendications précédentes, selon lequel une électronique d'évaluation (5) compare les dérivées dans le temps déterminées de la température (d/dt T1, d/dt T2, d/dt T3, d/dt T4, ...) dans le volume partiel (K1, K2, K3, K4, ...) avec des valeurs déterminées auparavant pour des modifications d'état identiques du mélange gazeux, avec des valeurs déterminées sur un autre convertisseur catalytique, et/ou avec des valeurs de consigne déterminées théoriquement sur la base de calculs de modélisation.

18. Procédé selon l'une quelconque des revendications précédentes, selon lequel le volume partiel (K4) analysé dans le convertisseur catalytique (K) est situé dans la zone de l'extrémité aval.

19. Procédé selon l'une quelconque des revendications 1 ou 3 à 18, selon lequel les états de deux ou de plusieurs volumes partiels (K1, K2, K3, K4, ...) sont analysés par un nombre correspondant de mesures de température.

20. Procédé selon la revendication 19, selon lequel le volume total du convertisseur catalytique (K) est considéré comme étant constitué de plusieurs volumes partiels (K1, K2, K3, K4, ...), et selon lequel l'état de chaque volume partiel (K1, K2, K3, K4, ...) est déterminé par une définition, si possible simultanée, de dérivées dans le temps de la température (d/dt T1, d/dt T2, d/dt T3, d/dt T4, ...) approximativement représentatives lors de modifications des propriétés du mélange gazeux, et selon lequel les différents états déterminés sont regroupés en une vue d'ensemble relative à l'état d'ensemble du convertisseur catalytique (K).

21. Procédé selon l'une quelconque des revendications précédentes, selon lequel les différentes variations des dérivées dans le temps de la température (d/dt T1, d/dt T2, d/dt T3, d/dt T4,...) sont enregistrées et analysées lors de modifications de différentes natures des propriétés du mélange gazeux, afin d'obtenir des informations sur l'état du volume partiel (K1, K2, K3, K4, ...) concernant différentes fonctions, par exemple le pouvoir de conversion et le comportement au démarrage à froid.

22. Procédé selon l'une quelconque des revendications précédentes, selon lequel, pour autant que ceci est techniquement possible, chaque capteur de température (S1, S2, S3, S4, ...) mesure la température au niveau de la source de chaleur, à savoir au niveau de la couche catalytiquement active.

23. Procédé selon la revendication 22, selon lequel chaque capteur de température (S1, S2, S3, S4, ...) est en contact thermique étroit avec la structure de support du convertisseur catalytique (K), de préférence intégré dans les parois de la structure de support.

24. Procédé selon la revendication 22, selon lequel chaque capteur de température (S1, S2, S3, S4, ...) est disposé dans le courant du mélange gazeux, de telle sorte qu'un bon transfert thermique soit assuré par l'intermédiaire du mélange gazeux, de la structure de support sur le capteur de température (S1, S2, S3, S4, ...).

25. Procédé selon la revendication 13, selon lequel des plages de valeurs de consigne sont déterminées à l'aide d'une fonction de modélisation qui, pour l'état respectif et/ou la modification de l'état respectif du moteur à combustion interne (1), indique les relations fonctionnelles entre elles des températures (T1, T2, T3, T4,...) dans différents volumes partiels (K1, K2, K3, K4, ...) du convertisseur catalytique (K), et avec les données provenant de la commande électronique (2) du moteur à combustion interne (1).

26. Procédé selon la revendication 25, selon lequel l'importance des plages de valeurs de consigne tient compte de tolérances qui peuvent par exemple être dues à des imprécisions de capteurs, à des tolérances de fabrication des convertisseurs catalytiques (K), et/ou à des différences de traitement du mélange du moteur à combustion interne (1).

27. Procédé selon l'une quelconque des revendications précédentes, selon lequel un état prédéterminé exactement défini du moteur à combustion interne (1) est perturbé de façon ciblée, et selon lequel la réaction des dérivées dans le temps (d/dt T1, d/dt T2, d/dt T3, d/dt T4, ...) à cette perturbation est comparée avec des plages de valeurs de consigne prescrites.

28. Procédé selon la revendication 25, selon lequel la perturbation est effectuée dans une phase de coupure de la poussée après une phase prolongée à puissance constante par une brève injection de carburant dans une ou plusieurs chambres de combustion, l'allumage étant coupé.

29. Procédé selon l'une quelconque des revendications précédentes, selon lequel un certain processus transitoire du moteur, par exemple une phase de démarrage à froid ou une phase d'accélération, est observé avec sa répercussion sur les dérivées dans le temps (d/dt T1, d/dt T2, d/dt T3, d/dt T4, ...).

30. Procédé selon l'une quelconque des revendications 25 à 29, comportant les phases suivantes :
a. la dérivée dans le temps (d/dt T1') à laquelle il y a lieu de s'attendre dans un premier volume partiel (K1) est définie à l'aide d'une fonction de modélisation, par le fait que la température des gaz d'échappement et l'énergie libérée dans le convertisseur catalytique sont calculées à partir de données disponibles dans la commande du moteur, concernant par exemple la vitesse de rotation, le débit massique, la quantité de carburant injectée, et la température du moteur ;
b. la température (T1) mesurée dans le premier volume partiel (K1), et/ou sa dérivée dans le temps (d/dt T1), sont comparées avec la température (T1') calculée et/ou sa dérivée dans le temps (d/dt T1'), des différences se situant en dehors d'une plage de valeurs de consigne étant enregistrées ;
c. la dérivée dans le temps (d/dt T2', d/dt T3', d/dt T4', ...) à laquelle il y a lieu de s'attendre dans l'un des volumes partiels (K2, K3, K4, ...) suivants est calculée à l'aide d'une fonction de modélisation, qui tient compte des données disponibles provenant de la commande du moteur et des dérivées dans le temps (d/dt T1) mesurées dans le volume partiel (K1) situé en amont ;
d. la dérivée dans le temps (d/dt T2, d/dt T3, d/dt T4, ...) mesurée dans les volumes partiels (K2, K3, K4, ...) suivants est comparée avec la dérivée dans le temps (d/dt T2', d/dt T3', d/dt T4', ...) calculée, des différences se situant en dehors d'une plage de valeurs de consigne étant enregistrées ;
e. à partir des différences enregistrées on détermine si, et dans quelle mesure, l'ensemble du convertisseur catalytique (K) remplit encore sa fonction, et quels volumes partiels (K1, K2, K3, K4) sont le cas échéant défectueux, et à quel degré.

31. Procédé selon l'une quelconque des revendications précédentes, selon lequel le premier volume partiel (K1) est situé dans un pré-catalyseur, alors que le deuxième volume partiel (K2) et les volumes partiels (K3, K4, ...) suivants sont situés dans différentes sections transversales ou corps partiels d'un catalyseur principal.

32. Procédé selon l'une quelconque des revendications précédentes, selon lequel les mesures de température sont effectuées au moyen de capteurs de température ponctuels ou au moyen de capteurs de température (S1, S2, S3, S4, ...) mesurant de façon représentative sur un volume partiel du convertisseur catalytique.

33. Procédé selon l'une quelconque des revendications précédentes, selon lequel une régulation lambda du convertisseur catalytique (K) éventuellement prévue est coupée pendant la vérification.
